(19) Europäisches Patentamt
European Patent Office
Office européen des brevets

(11) Publication number: **0 121 420**
**B1**

(12) **EUROPEAN PATENT SPECIFICATION**

(45) Date of publication of patent specification: **10.12.86**

(51) Int. Cl.$^4$: **C 07 C 153/00**

(21) Application number: **84302169.2**

(22) Date of filing: **29.03.84**

(54) **Continuous process for the production of methomyl.**

(30) Priority: **30.03.83 US 480497**

(43) Date of publication of application:
**10.10.84 Bulletin 84/41**

(45) Publication of the grant of the patent:
**10.12.86 Bulletin 86/50**

(84) Designated Contracting States:
**AT BE CH DE FR GB IT LI LU NL SE**

(56) References cited:
**US-A-3 459 866**

(73) Proprietor: **UNION CARBIDE CORPORATION**
**39 Old Ridgebury Road**
**Danbury Connecticut 06817 (US)**

(72) Inventor: **Ewbank, Rodger Maurice**
**1146 Trowbridge Drive**
**Houston 77062 Texas (US)**
Inventor: **Nelson, James Russell**
**1002 Dell Way**
**South Charleston 25309 West Virginia (US)**

(74) Representative: **Baverstock, Michael George Douglas et al**
**BOULT, WADE & TENNANT 27 Furnival Street**
**London, EC4A 1PQ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to a process for the production of methomyl (l-methylthio-acetaldoxime N-methylcarbamate) which is known to have broad pesticidal activity.

Heretofore, a number of batch processes have been proposed for the production of methomyl. Certain of such processes, together with the nematocidal activity of this composition, are disclosed in U.S.—A—3,459,866 to Buchanan, issued August 5, 1969 and entitled "Hydroxamate Carbamates as Nematocides". In that disclosure, the processes may involve the conversion of thiolhydroxamate esters to any one of a broad class of O-dialkylcarbamylhydroxamate esters and treating the resulting intermediate with sodium hydride in tetrahydrofuran and subsequently with a dialkylcarbamyl chloride. The resulting esters are members of a class having the following formula:

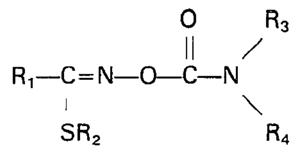

wherein:

$R_1$ is alkyl of 1 through 4 carbon atoms, alkoxylalkyl of 2 through 5 carbon atoms, alkylthioalkyl of 2 through 5 carbon atoms 4-halophenyl or benzoyl,

$R_2$ is alkyl of 1 through 4 atoms;

$R_3$ is hydrogen, methyl, ethyl, propyl, allyl, butenyl or propargyl; and

$R_4$ is hydrogen or methyl.

When $R_1$, $R_2$ and $R_3$ are methyl groups and $R_4$ is hydrogen, the compound of the formula is methomyl.

A further reference, U.S.—A—3,506,698 issued April 14, 1970 to Jelinek and entitled "Preparation of Thiolhydroxamate Carbamates", discloses the reaction of thiolhydroxamate esters with methyl isocyanate to provide a class of compounds which includes methomyl.

It is, therefore, known in the prior art to produce methomyl by the reaction of methyl thioacetalooxime and methyl isocyanate.

Other different and more exotic carbamates may be prepared in accordance with the teachings of U.S.—A—3,574,736 to Fuchs; 3,576,834 to Buchanan; 3,639,633 to Buchanan; and 3,890,362 to Alverez.

All of the processes referred to above contemplate the production of methomyl employing a batch process requiring relatively high reaction temperature operations, substantial cooling requirements and severe limitations on the total production time required for the process. These batch process limitations, in turn, require certain secondary limitations which further reduce the overall efficiency of the process with respect to heat input requirements and efficiency based on methyl isocyanate use.

Accordingly, it is an object of the present invention to provide a process for the production of methomyl in which the heat input and efficiency (based on methyl isocyanate usage) are improved over those obtainable in the processes of the prior art. Other aims and advantages of the invention will be apparent from the following description and appended claims.

In accordance with the present invention, a continuous process is provided for the production of methomyl comprising the steps of: continuously forming, in an inert organic solvent and at an elevated reaction-initiating temperature of from 30—70°C, a liquid mixture of methylthioacetaldoxime and methyl isocyanate in an amount in excess of stoichiometric proportions; passing the mixture through a plug-flow, adiabatic, tubular reactor, maintained at a pressure of from 206.9 to 482.7 $KN/m^2$ (30 to 70 psig), to produce reaction product at a temperature up to a reactor discharge temperature of from 80 to 120°C; and withdrawing the reaction product from the reactor and stripping unreacted methyl isocyanate and solvent therefrom to provide product methomyl, while recycling at least a portion of the unreacted isocyanate and solvent to the mixture.

The continuous process of the present invention is illustrated by the following equation:

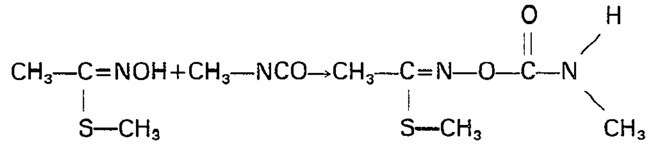

(methylthio acetaldoxime) (methyl isocyanate) (methomyl)

To ensure full methylthioacetaldoxime conversion, an amount of methyl isocyanate in excess of stoichiometric proportions is fed to the reaction.

In the continuous process of the invention, the reaction is carried out at an elevated reaction initiation temperature from 30—70°C, preferably of the order of 50°C. Since the reaction is adiabatic, the temperature at the discharge end of the plug-flow, tubular reactor is about 100°C.

The pressure is between 206.9 and 482.7 KN/$m^2$ (30 and 70 psig) and preferably of the order of between 275.8 and 413.7 KN/$m^2$ (40 and 60 psig).

A tubular reactor is selected having an internal diameter and length capable of providing a residence time for passage of the reaction mixture through the reactor in a time of the order of about 30 minutes.

The reaction of the continuous process of the present invention is carried out in an inert organic solvent which is preferably a lower aliphatic ketone, chlorinated or aromatic hydrocarbons, ether, or paraffin, or mixtures thereof. Methyl ethyl ketones, methyl isobutyl ketone and vinyl methyl pyridine or mixtures thereof are preferred solvents.

Whereas the reaction of the process of the present invention may be carried out without the need for a catalyst, any one or a mixture of a number of reaction catalysts known to be active for catalyzing this reaction may be employed in low concentrations, e.g. of the order of one-tenth of one weight percent. Aliphatic amines; tertiary amines and aromatic amines are preferred.

In the drawing, the single figure schematically represents a flowsheet of apparatus suitable for the practice of the continuous process of the invention.

As there shown, methylthioacetaldoxime (MSAO) is introduced into the system through line 10. The start-up and later make-up methyl isocyanate (MIC) is concurrently introduced into the system through line 12. The inlet reactants mix in line 14 and are passed through heater 16 to a tubular reactor 18, having the usual plurality of serpentine bends 20, before discharging the reaction product into stripper 22 at point 23. A separation is effected in stripper 22 between the top fraction containing essentially of MIC and a portion of the solvent which stream is recycled through line 24 to the incoming MIC stream and the bottom fraction discharge of stripper 22 through line 26 and containing product methomyl and the remainder of the solvent.

As to materials of construction of the tubular reactor, it is preferred that a Type 304 stainless steel reactor be employed. The reactor dimensions are selected based on the material throughput rate. For example, for a 454 kg 1000 lbs). per hour rate, a 152 mm (6-inch) internal diameter and a length of 250 ft is preferred.

The following Table 1 sets forth, in weight percent, various fluid compositions for the various streams in the lines of the flow diagram of the drawing.

In an example of the process of the invention, apparatus in accordance with that of the flow sheet of the drawing is employed at the temperatures, pressures, compositions and flow rates set forth in Table I to produce product methomyl. The reactor residence time for such example is 31 minutes for a 152 mm (6-inch), 76 metres (250 foot) length type 304 stainless steel reactor.

TABLE I

| Stream (Line No.) | 12 | 10 | 14 | 24 | 23 | 26 |
|---|---|---|---|---|---|---|
| | Fresh MIC (wt.%) | HSAO charge (wt.%) | Reactor feed (wt.%) | Recycle MIC/ MIBK (wt.%) | MIC stripper feed (wt.%) | Product outlet |
| Component | | | | | | |
| Light ends | — | 0.11 | 0.13 | 0.38 | 0.88 | |
| Methyl isocyanate | 100.00 | — | 9.98 | 11.14 | 1.19 | |
| Solvent/HIBK | | 80.50 | 74.50 | 88.48 | 74.81 | |
| Water | | 0.04 | .04 | — | 0.01 | |
| 1,3 Dimethyl URZA | | | | | 0.16 | |
| Syn-Methylthio acetaldoxime | | 18.83 | 15.33 | | 0.05 | |
| Anti-Methylthio acetaldoxime | | 0.12 | 0.10 | | | |
| Syn-Methomyl | | | | | 22.07 | |
| Anti-Methomyl | | | | | 0.23 | |
| Catalyst/Dimethyldodecylamine | | 0.10 | 0.08 | | 0.08 | |
| Heavy ends | | 0.03 | 0.24 | | 0.52 | |
| Total | 100.00 | 100.00 | 100.00 | 100.00 | 100.00 | |
| Flow—kg per hour (lbs. per hour) | 183 (403) | 1,674 (3,690) | 2,055 (4,531) | 199 (438) | 2,055 (4,531) | 1,857 (4,093) |
| Temperature (°C) | 2 | 50 | 50 | 50 | 98 | — |
| Pressure—$KN/m^2$ (psig) | 724 (105) | 724 (105) | 414 (60) | 724 (105) | 276 (40) | — — |

Residence time in reactor=31 minutes

In the comparison of the continuous process of the present invention with the batch process of the prior art, certain basic parameter differences, which result in highly significant efficiency differences, should be noted.

In the batch process, MSAO and MIC mixing and reaction initiation results in the development of high temperatures in short periods of time. Heat is constantly removed to maintain the reactor at the desired reaction temperature level for the entire reaction period. Upon completion of the reaction, the products are cooled and transferred to holding tanks prior to passage to a stripper.

In the continuous process of the present invention, MSAO and MIC are continuously mixed and heated to a lower reaction initiating temperature. Heat removal during the reaction is not necessary and, as a result, the temperature of the material increases to a substantially higher temperature than that obtainable in a batch process operation. This use of higher reaction temperatures and pressure in the continuous process operation permits the use of a simplified continuous tubular reactor resulting in lower capital investment and lower operating costs due to a substantial reduction in vent losses (and consequent MIC losses) together with lower heating and cooling requirements.

The following Table 2 sets forth an operating comparison between a typical batch process system and the continuous process system of the present invention.

TABLE 2

| | Batch | Continuous |
|---|---|---|
| Reaction temperature (°C) | | |
| Initial | 43 | 50 |
| Reaction | 77(1) | 50—98(2) |
| Stripper feed | 46 | 98 |
| Reactor pressure KN/$m^2$ (psig) | 6.9—34.5 (1—5) | 275.8—413.7 (40—60) |
| Time required (minutes) | | |
| Charge MSAO | 45 | 0(3) |
| Charge recycle MIC | 15 | 0(3) |
| Charge fresh MIC | 10—30 | 0(3) |
| Reaction | 110 | 30 |
| Empty reactor | 35—40 | 0(3) |
| Total | 215—240 | 30 |

(1) Essentially constant temperature
(2) Adiabatic tempertaure increases through reactor
(3) Continuous raw material feeds and product withdrawal

In the batch process operation, reactor materials are charged into or out of: weighing tanks the reactor, recycle tanks and holding tanks. This result in vapors being vented from these vessels which contain MIC, a relatively expensive raw material. Estimates based upon material balance calculations indicate 0.26% of the MIC feed to the reaction system is lost in these vents. Continuous process operation encounters no corresponding MIC loss since there are no vapor vent streams employed.

The continuous process operation employs no heat removal, thereby allowing the reaction temperature to rise. This produces a significantly lower utility usage for continuous operation. Other batch process operations, such as addition of heat to the reactor and subsequent removal, imposes a higher heat input to the MIC stripper, rather than the constant feed stripper temperature employed in the continuous process of the invention. The difference in temperature between batch and continuous operation requires the introduction of more heat to the batch process operation with the calculated resulting effect that the continuous process operation employs only 18% of the heat input required by the batch process operation.

In summary, it has been estimated by materical balance calculations that the continuous process operation, as against a batch process operation, results in: a 33% lower capital investment; an MIC efficiency gain of 0.26%; and a lower utility usage of 18%.

It is, however, believed that, in spite of the improved economic efficiences in the use of the continuous processes of the present invention over the batch processes of the prior art, the most significant improvements of the present invention are the efficiency of oxime-to-methomyl and of MIC-to-methomyl due to the reduced reaction time and less thermal decomposition of the methomyl. As pointed out hereinabove, the MIC efficiency is further enhanced due to the absence of venting losses.

**Claims**

1. A continuous process for the production of methomyl comprising the steps of: continuously forming, in an inert organic solvent and at an elevated reaction-initiating temperature of from 30—70°C, a liquid mixture of methylthioacetaldoxime and with methyl isocyanate in an amount in excess of stoichiometric proportions; passing said mixture through a plug-flow, adiabatic, tubular reactor, maintained at a pressure of from 206.9 to 402.7 KN/$m^2$ (30 to 70 psig), to produce reaction product at a temperature up to a reactor discharge temperature of from 80 to 120°C; and withdrawing said reaction product from said reactor and stripping unreacted methyl isocyanate and solvent therefrom to provide product methomyl, while recycling at least a portion of said unreacted methyl isocyanate and solvent to the mixture.

2. A process as claimed in claim 1, wherein said reaction-initiating temperature is about 50°C.

3. A process as claimed in claim 1 or 2, wherein said pressure is between 275.8 and 413.7 KN/$m^2$ (40 and 60 psig).

4. A process as claimed in any one of the preceding claims wherein said discharge temperature is about 100°C.

5. A process as claimed in any one of the preceding claims wherein said tubular reactor is selected to have an internal diameter and length so as to provide a residence time for said mixture within said reactor of the order of about 30 minutes.

6. A process as claimed in any one of the preceding claims wherein said inert organic solvent is a lower aliphatic ketone.

7. A process as claimed in any one of the preceding claims wherein methomyl is formed in the presence of a catalyst.

8. A process as claimed in claim 7, wherein said catalyst is an aliphatic amine.

**Patentansprüche**

1. Kontinuierliches Verfahren zur Herstellung von Methomyl, umfassend die Stufen der: kontinuierlichen Bildung in einem inerten organischen Lösungsmittel und bei einer erhöhten, die Reaktion initiierenden Temperatur von 30 bis 70°C einer flüssigen Mischung aus Methylthioacetaldoxim und Methylisocyanat in einer Menge im überschuß zu dem stöchiometrischen Verhältnis, des Hindurchleitens dieser Mischung durch einen adiabatischen, rohrförmigen Reaktor praktisch ohne Rückmischung des Teilchenstromes, der auf einem Druck von 206,9 bis 402,7 KN/$m^2$ (30 bis 70 psig) gehalten wird, zur Bildung des Reaktionsproduktes bei einer Temperatur bis zu einer Reaktorausstoßtemperatur von 80 bis 120°C; und des Abziehens dieses Reaktionsproduktes aus dem Reaktor und das Abstrippen von nicht umgesetztem Methylisocyanat und Lösungsmittel zur Bildung des Methomylprodukts, während mindestens ein Teil des nicht umgesetzten Methylisocyanates und Lösungsmittels in die Mischung zurückgeführt wird.

2. Verfarhen nach Anspruch 1, worin die die Reaktion initiierende Temperatur etwa 50°C beträgt.

3. Verfahren nach Anspruch 1 oder 2, worin der Druck zwischen 275,8 und 413,7 KN/$m^2$ (40 und 60 psig) beträgt.

4. Verfahren nach irgendeinem der vorhergehenden Ansprüche, worin die Ausstoßtemperatur etwa 100°C beträgt.

5. Verfahren nach irgendeinem der vorhergehenden Ansprüche, worin der rohrförmige Reaktor so gewählt ist, daß er einen solchen inneren Durchmesser und eine solche Länge hat, die eine Verweilzeit der Mischung im Reaktor in der Größenordnung von etwa 30 min ergeben.

6. Verfahren nach irgendeinem der vorhergehenden Ansprüche, worin das inerte organische Lösungsmittel ein niedriges aliphatisches Keton ist.

7. Verfahren nach irgendeinem der vorhergehenden Ansprüche, worin Methomyl in Anwesenheit eines Katalysators gebildet wird.

8. Verfahren nach Anspruch 7, worin der Katalysator ein aliphatisches Amin ist.

**Revendications**

1. Procédé continu de production de méthomyle, qui comprend les étapes consistant: à former continuellement, dans un solvant organique inerte et à une température élevée de déclenchement de réaction de 30 à 70°C, un mélange liquide de méthylthioacétaldoxime et d'isocyanate de méthyle en une quantité en excès par rapport aux proportions stoechiométriques; à faire passer ledit mélange dans un réacteur tubulaire adiabatique à écoulement bouchon, maintenu à une pression de 206,9 à 402,7 kN/$m^2$ (30 à 70 lb/$in^2$ au manomètre) pour former un produit de réaction à une température s'élevant jusqu'à une température de décharge du réacteur de 80 à 120°C; et à décharger ledit produit de réaction dudit réacteur et à en chasser l'isocyanate de méthyle n'ayant pas réagi et le solvant pour obtenir le produit, à savoir le méthomyle, tout en recyclant au mélange au moins une portion de l'isocyanate de méthyle n'ayant pas réagi et du solvant.

2. Procédé suivant la revendication 1, dans lequel la température de déclenchement de réaction est d'environ 50°C.

3. Procédé suivant la revendication 1 ou 2, dans lequel la pression est comprise entre 275,8 et 413,7 kN/$m^2$ (40 et 60 lb/$in^2$ au manomètre).

4. Procédé suivant l'une quelconque des revendications précédentes, dans lequel la température de décharge est d'environ 100°C.

5. Procédé suivant l'une quelconque des revendications précédentes, dans lequel le réacteur tubulaire est choisi de manière qu'il ait un diamètre intérieur et une longueur permettant une durée de séjour dudit mélange dans la réacteur de l'ordre d'environ 30 minutes.

6. Procédé suivant l'une quelconque des revendications précédentes, dans lequel le solvant organique inerte est une cétone aliphatique inférieure.

7. Procédé suivant l'une quelconque des revendications précédentes, dans lequel le méthomyle est formé en présence d'un catalyseur.

8. Procédé suivant la revendication 7, dans lequel le catalyseur est une amine aliphatique.

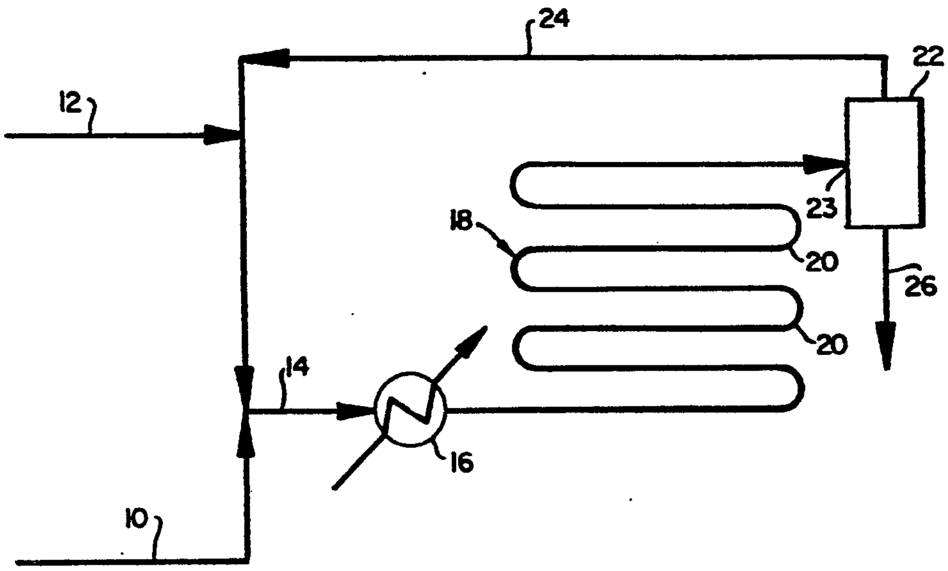
24
22
12
23
18
20
26
20
14
16
10